(19) Europäisches Patentamt

European Patent Office

Office européen des brevets

(11) **EP 4 617 512 B1**

(12) **EUROPÄISCHE PATENTSCHRIFT**

(45) Veröffentlichungstag und Bekanntmachung des Hinweises auf die Patenterteilung:
**06.05.2026 Patentblatt 2026/19**

(21) Anmeldenummer: **24163848.5**

(22) Anmeldetag: **15.03.2024**

(51) Internationale Patentklassifikation (IPC):
**F16B 19/08** (2006.01)    **F16B 37/06** (2006.01)

(52) Gemeinsame Patentklassifikation (CPC):
**F16B 19/086; F16B 37/068**

(54) **SELBSTSTANZENDE METALLISCHE BEFESTIGUNGSHÜLSE, ERSTES BAUTEIL MIT DER BEFESTIGUNGSHÜLSE, VERBINDUNGSSTRUKTUR MIT DEM ERSTEN BAUTEIL SOWIE SETZVERFAHREN DER BEFESTIGUNGSHÜLSE**

SELF-PIERCING METAL FASTENING SLEEVE, FIRST COMPONENT HAVING THE FASTENING SLEEVE, CONNECTION STRUCTURE HAVING THE FIRST COMPONENT, AND METHOD FOR SETTING THE FASTENING SLEEVE

MANCHON DE FIXATION MÉTALLIQUE AUTO-POINÇONNEUR, PREMIER COMPOSANT DOTÉ DU MANCHON DE FIXATION, STRUCTURE DE CONNEXION COMPRENANT LE PREMIER COMPOSANT ET PROCÉDÉ DE POSE DU MANCHON DE FIXATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**17.09.2025 Patentblatt 2025/38**

(73) Patentinhaber: **Böllhoff Verbindungstechnik GmbH**
**33649 Bielefeld (DE)**

(72) Erfinder:
• **HÜTHEL, Niklas**
**49080 Osnabrück (DE)**
• **MENNE, Franz Ferdinand**
**33175 Bad Lippspringe (DE)**
• **UFFELMANN, Marcel**
**33415 Verl (DE)**
• **STEINIG, Marc**
**33647 Bielefeld (DE)**

(74) Vertreter: **HWP Intellectual Property**
**Ridlerstraße 35**
**80339 München (DE)**

(56) Entgegenhaltungen:
WO-A1-2004/022987    DE-A1- 102014 104 571
US-A1- 2005 180 838    US-A1- 2014 241 831

## Beschreibung

### 1. Gebiet der Erfindung

Die vorliegende Erfindung betrifft eine selbststanzende metallisch Befestigungshülse, die angepasst ist, um in einem metallischen Bauteil, vorzugsweise einem hochfesten metallischen Bauteil, eine Öffnungsverstärkung zu bilden, ein erstes Bauteil mit der Befestigungshülse, eine Verbindungsstruktur bestehend aus dem ersten Bauteil mit der Befestigungshülse und einem zweiten Bauteil sowie ein Setzverfahren der Befestigungshülse.

### 2. Hintergrund der Erfindung

Im Stand der Technik sind verschiedene Befestigungshülsen bekannt, die in Bauteilöffnungen vorgelochter Bauteile befestigt werden. Somit sind diese Befestigungshülsen derart konstruiert, dass sie nicht stanzend in Bauteilöffnungen beispielsweise als Öffnungsverstärkung eingebracht werden.

Ein Beispiel für eine solche Befestigungshülse findet sich in US 5,513,933 A. Das hierin beschriebene selbstklemmende Befestigungselement kann mit einem Abschnitt aus Blechmaterial verbunden werden, in dem eine Öffnung zur Aufnahme des Befestigungselements ausgebildet ist. Das selbstklemmende Befestigungselement umfasst einen Kopfabschnitt und einen Schaftabschnitt, der einen kleineren Außendurchmesser als der Kopfabschnitt aufweist und sich axial von einer Seite des Kopfabschnitts erstreckt. Ein Verdrängungsabschnitt erstreckt sich axial von der einen Seite des Kopfabschnitts und erstreckt sich radial nach außen vom Schaftabschnitt. Innerhalb des Verdrängungsabschnitts ist eine hinterschnittene Ringnut ausgebildet, die sich axial in Richtung des Kopfabschnitts erstreckt und den Schaftabschnitt radial umgibt. Ein allgemein ringförmiger Kalibrierring ist um den Schaftabschnitt herum gebildet und hat einen axialen Abstand von der einen Seite des Kopfabschnitts, der etwas größer ist als die axiale Erstreckung des Verdrängungsabschnitts. Der Außendurchmesser des Kalibrierrings ist größer als der Außendurchmesser des Schaftabschnitts und auch größer als der Innendurchmesser der hinterschnittenen Ringnut.

Anstelle einer Befestigungshülse beschäftigt sich WO2022/123805 A1 mit der Bereitstellung eines Stehbolzens, der die Qualität verbessern kann, wenn er an einer zu befestigenden Platte befestigt wird. Der Stehbolzen ist unlösbar und drehfest an einer zu befestigenden Platte befestigt, wobei der Stehbolzen einen Kopf, einen Schraubenschaft, einen Drehstopper, eine Ringnut und einen ringförmigen Vorsprung umfasst. Der Stehbolzen ist so konfiguriert, dass die zu befestigende Platte zwischen einer Sitzfläche des Kopfes und dem ringförmigen Vorsprung eingeklemmt wird, und einen eingekerbten Teil im Drehstopper aufweist, der in Richtung einer Oberseite in Einschraubrichtung ausgebildet ist.

Eine Verbindung, die zwei Werkstücke umfasst, die jeweils eine durch eine Innenwand definierte Öffnung aufweisen, ist in EP 0 856 670 A1 beschrieben. Zumindest in der Öffnung durch das erste Werkstück sitzt ein Befestigungselement. Das Befestigungselement weist einen Schaftabschnitt auf. Der erste Abschnitt weist einen Vorsprung auf, der von einer Unterseite des ersten Abschnitts nach außen hervorsteht. Der Schaftabschnitt weist eine Haltenut auf. Das Befestigungselement wird an einer axialen Bewegung relativ zum ersten Werkstück gehindert, nachdem das Material, aus dem das erste Werkstück besteht, in die Haltenut geflossen ist. Das Befestigungselement kann sich relativ zum ersten Werkstück drehen, nachdem das Material, aus dem das erste Werkstück besteht, in die Haltenut geflossen ist. Ebenfalls enthalten ist eine dem Befestigungselement zugeordnete Vorrichtung zum Befestigen des Befestigungselements am zweiten Werkstück.

US 1,946,064 A beschreibt einen Schmierantriebsanschluss mit einem Schaft, der in eine vorgeformte Aussparung in einem Aufnahmeelement eindringen kann, wobei der Anschluss außerdem mit einem herabhängenden Vorsprung versehen ist, der so angeordnet ist, dass er in das Metall des Aufnahmeelements eindringt und es seitlich verschiebt, wenn der Schaft darin eingetrieben wird, wobei der Schaft eine Aussparung darin aufweist.

Von den Befestigungselementen und Befestigungshülsen, die in vorgelochte Bauteile eingebracht werden, sind die Befestigungshülsen zu unterscheiden, die stanzend in ein Bauteil eingebracht werden. Denn anders als die in ein vorgelochtes Bauteil einzubringenden Elemente müssen die stanzenden Elemente eine Stanzseite aufweisen, die den beim Stanzen auftretenden Kräften standhält.

Ein erstes Beispiel für ein solches selbststanzendes Element findet sich in DE 10 2008 017 689 A1. Die hier beschriebene Einpressmutter weist einen Ringkorpus auf, der einen ersten Stirnflächenbereich, eine Außenumfangsfläche, eine zumindest abschnittsweise mit einem Gewinde versehene Bohrung und einen Sitzflächenbereich aufweist. Der Sitzflächenbereich umfasst einen zur Bohrung konzentrischen Ringzapfen und eine einen Fußbereich des Ringzapfens umsäumende Ringschulter. Der Ringzapfen ist als radial plastisch weitbare Struktur ausgeführt, die als solche der Verankerung des Ringkorpus an einem Bauteil dient. Die Ringschulter ist mit mehreren in Umfangsrichtung der Ringschulter, auf dieser abfolgend, angeordneten Eingriffsrippen versehen, die über eine Hauptfläche der Ringschulter in axialer Richtung hervorstehen. Die Eingriffsrippen weisen jeweils eine aus einem Fußbereich des Ringzapfens abfallende zulaufende Rückenfläche auf.

CN 102003448 A beschreibt eine Vierkant-Druckknietmutter, die einen Mutternkörper umfasst. In der Mitte des Mutternkörpers ist ein Gewindeloch angeordnet. Der Kopf des Mutternkörpers ist mit einem Flansch versehen. Unterhalb des Flansches ist eine Stufe angeordnet, die eine konische Oberflächenform mit breitem oberem Teil und schmalem unteren Teil annimmt. Die Stufe ist außerdem mit einer hervorstehenden Rippenleiste versehen. Ein Verbindungsteil des Flansches und der Stufe ist mit einer Führungsnut in einem kreisförmigen Bogenübergang versehen. Durch die Übernahme der Struktur ist die Vierkantmutter fest auf einer Stahlplatte angeordnet und kann auch mit anderen Bauteilen verbunden werden.

Ein Funktionselement zum Einpressen in ein Werkstück, insbesondere in ein Blechteil, ist in EP 4 023 894 A1 beschrieben und umfasst einen Funktionsabschnitt und einen Befestigungsabschnitt mit einer Anschlagfläche zum Einleiten einer Einpresskraft in das Funktionselement. Zudem ist eine der Anschlagfläche gegenüberliegende Werkstückanlagefläche vorhanden, die in Anlage mit dem Werkstück bringbar ist und die insbesondere flanschartig ausgestaltet ist. Weiterhin ist ein in einer Axialrichtung und/oder einer Radialrichtung des Funktionselements zwischen der Werkstückanlagefläche und dem Funktionsabschnitt liegender Dichtungsbereich zum Aufnehmen von verdrängtem Material des Werkstücks bereitgestellt, welcher eine Anpressfläche für das verdrängte Material ausbildet, um eine Verbindung zwischen dem Funktionselement und dem Werkstück abzudichten. Die Anpressfläche weist eine erste Teilfläche, die schräg zu der Axialrichtung des Funktionselements verläuft und die in einer Einpressrichtung des Funktionselements gesehen konvergiert, und eine zweite Teilfläche auf, die sich an die erste Teilfläche anschließt, schräg zu der Axialrichtung des Funktionselements verläuft und die in der Einpressrichtung des Funktionselements gesehen divergiert.

Abschließend ist aus US 2007/258788 A1 eine Lochmutter zur Befestigung an einem plastisch verformbaren Metallblech bekannt, die eine Anschlagfläche aufweist, die zur Anlage an dem Metallblech geeignet ist. Ein hinterschnittener Vorsprung steht relativ zur Anschlagfläche vor. Zudem ist eine versenkte Nut vorgesehen, die in der Anlagefläche ausgebildet ist und den Vorsprung zumindest teilweise umgibt. Die Nut weist gegenüber dem Vorsprung keine aktiven Hinterschnitte auf. Die Nut umfasst eine Innennut und eine Außennut sowie einen dazwischen liegenden Grat.

WO 2004/022987 A1 beschreibt ein selbstbefestigendes weibliches Befestigungselement, beispielsweise eine Stanzmutter, mit einem ringförmigen Führungszapfen, einem den Führungszapfen umgebenden ringförmigen Flansch und einer ringförmigen Nut in der den Führungszapfen umgebenden Flanschauflagefläche. Die Bodenwand der Nut weist keilförmige Aussparungen auf, die die Bodenwand der Nut in Segmente mit parallelen Seiten unterteilen, die durch die benachbarten keilförmigen Aussparungen definiert sind. Die geneigte Außenwand des Führungszapfens verformt sich während der Montage radial, um das Blech in der Nut einzuschließen und zu verdichten, wodurch eine dichte und sichere Montage mit verbesserter Auszugs- und Verdrehfestigkeit entsteht.

Ein Nachteil dieser Befestigungshülsen ist, dass sie nur in relative weiche Materialien gesetzt werden können, d.h. insbesondere nicht in hochfeste Stähle. Zudem ist zu berücksichtigen, dass gerade der Durchmesser einer eventuell vorhandenen Durchgangsbohrung in der Befestigungshülse stark beschränkt ist, um zu gewährleisten, dass die Befestigungshülse im Rahmen eines Stanzvorgangs nicht aufgeweitet und/oder deformiert wird.

Die Aufgabe der vorliegenden Erfindung ist daher die Bereitstellung einer im Vergleich zum bekannten Stand der Technik verbesserten selbststanzenden metallischen Befestigungshülse, die angepasst ist, um in einem metallischen Bauteil eine Öffnungsverstärkung zu bilden. Insbesondere soll die im Vergleich zum Stand der Technik verbesserte selbststanzende metallische Befestigungshülse in ein hochfestes metallisches Bauteil setzbar sein und einen größeren Anwendungsspielraum im Hinblick auf den zur Verfügung gestellten Durchmesser bereitstellen. Weiterhin ist es eine Aufgabe der vorliegenden Erfindung, ein entsprechendes ersten Bauteil mit der Befestigungshülse, eine Verbindungsstruktur mit dem ersten Bauteil und einem zweiten Bauteil sowie ein Setzverfahren für die Befestigungshülse bereitzustellen.

<u>3. Zusammenfassung der Erfindung</u>

Die obige Aufgabe wird gelöst durch eine selbststanzende metallische Befestigungshülse gemäß dem unabhängigen Patentanspruch 1, ein erstes Bauteil mit der Befestigungshülse gemäß Patentanspruch 12, eine Verbindungsstruktur mit dem ersten Bauteil und einem zweiten Bauteil gemäß Patentanspruch 14 sowie ein Setzverfahren zur Befestigung der Befestigungshülse gemäß dem unabhängigen Patentanspruch 15. Vorteilhafte Ausführungsformen und Weiterentwicklungen ergeben sich aus der nachfolgenden Beschreibung, den Zeichnungen sowie den anhängigen Patentansprüchen.

Eine erfindungsgemäße selbststanzende metallische Befestigungshülse ist angepasst, um in einem metallischen Bauteil, vorzugsweise in einem hochfesten metallischen Bauteil, eine Öffnungsverstärkung zu bilden. Die erfindungsgemäße Befestigungshülse weist die folgenden Merkmale auf: einen hohlzylindrischen Schaft mit einem ersten und einem zweiten axialen Ende, einen Flansch, der zwischen dem ersten und dem zweiten axialen Ende angeordnet und geschlossen um den Schaft umlaufend ausgebildet ist, wobei das erste und das zweite axiale Ende über den Flansch vorstehen, der Flansch auf der dem ersten axialen Ende zugewandten Seite einen Prägering aufweist, der benachbart zum Schaft angeordnet ist, und ein erster Schaftbereich zwischen dem Flansch und dem ersten axialen Ende stellt einen Stanz- und Befestigungsbereich zur verliersicheren Befestigung der Befestigungshülse an dem metallischen Bauteil bereit, wobei der Stanz- und Befestigungsbereich vorzugsweise nicht radial aufweitbar ist, und ein zweiter Schaftbereich zwischen dem Flansch und dem zweiten axialen Ende stellt einen Funktionsbereich bereit.

Zur besseren Nachvollziehbarkeit wird die erfindungsgemäße selbststanzende metallische Befestigungshülse nachfolgend im Rahmen ihrer Verwendung in einem entsprechenden Setzverfahren erläutert. Als Bauteil, in das die Befestigungshülse gesetzt wird, dient ein metallisches Bauteil, beispielsweise ein Blech. Eine Dicke des Blechs ist vorzugweise höchstens gleich einer Länge des ersten Schaftbereichs, d.h. des Abstands zwischen dem ersten axialen Ende und der dem ersten axialen Ende zugewandten Seite des Flanschs. Da es sich um eine selbststanzende Befestigungshülse handelt, weist das Bauteil keine Vorlochung auf.

In einem ersten Schritt werden das Bauteil und die Befestigungshülse bereitgestellt. Dabei wird die Befestigungshülse mit dem ersten axialen Ende benachbart zum Bauteil angeordnet.

Nun wird die Befestigungshülse mit dem ersten axialen Ende voraus in das erste Bauteil eingetrieben. Hierzu dient ein an sich bekanntes Setzwerkzeug mit einem Stempel und einer Matrize. Der Stempel kann die Form eines Hohlzylinders aufweisen, so dass er nur am Flansch der Befestigungshülse angreift. Alternativ kann der Stempel nur am zweiten axialen Ende des Schafts angreifen. In einer weiteren Alternative ist der Stempel so ausgebildet, dass er sowohl am Flansch wie auch am zweiten axialen Ende des Schafts angreift. Alle drei Ausgestaltungen werden später unter Bezugnahme auf die bevorzugten Ausführungsformen detailliert erläutert.

Beim Eintreiben der Befestigungshülse in das Bauteil wird ein Stanzbutzen von dem ersten Bauteil abgetrennt. Um die Abfuhr des Stanzbutzens sicherzustellen, ist die Matrize in bekannter Weise hohlzylindrisch ausgestaltet.

Nach dem Eintreiben der Befestigungshülse in das Bauteil und dem Abtrennen des Stanzbutzens von dem Bauteil liegt der Prägering an dem Bauteil an. Nun wird die Befestigungshülse weiter in das Bauteil eingetrieben, so dass der Prägering in das Bauteil gepresst wird. Hierdurch wird Material des ersten Bauteils in Richtung des ersten Schaftbereichs verdrängt und die Befestigungshülse ist aufgrund eines Kraftschlusses verliersicher im Bauteil angeordnet.

Das erste axiale Ende und somit auch der erste Schaftbereich dienen somit als Stanz- und Befestigungsbereich im Bauteil. Aufgrund der Dimensionierung, d.h. der Länge des ersten Schaftbereichs und der Dicke des Bauteils erfolgt eine Befestigung der Befestigungshülse ausschließlich in einem Bauteil.

Eine spätere Verbindung zu einem weiteren oder zweiten Bauteil erfolgt über den Funktionsabschnitt der Befestigungshülse zu einem späteren Zeitpunkt. Der Funktionsabschnitt kann zu diesem Zweck beliebig ausgestaltet sein, gerade im Hinblick auf seine Dimensionierung. Zudem kann er ein Innen- und/oder Außengewinde aufweisen. Alternativ ist er im Inneren und/oder Außen gewindelos ausgebildet.

Ein Vorteil der erfindungsgemäßen Befestigungshülse ist somit, dass diese in einem einstufigen Verfahren in das Bauteil gesetzt werden kann. Zudem ist sie selbststanzend ausgebildet. Die aufgrund des Kraftschlusses zwischen erstem Bauteil und Befestigungshülse realisierte Verliersicherung stellt zudem im Vergleich zum Stand der Technik hohe Auszugkräften von über 1 kN und vorzugsweise über 5 kN bereit.

In einer bevorzugten Ausführungsform der selbststanzenden metallischen Befestigungshülse sind ein Außendurchmesser des ersten Schaftbereichs und ein Außendurchmesser des zweiten Schaftbereichs kleiner als ein Außendurchmesser des Flanschs. Vorzugsweise ist der Außendurchmesser des ersten Schaftbereichs zudem kleiner als der Außendurchmesser des zweiten Schaftbereichs. Somit weisen sowohl der Funktionsbereich als auch der Stanz- und Befestigungsbereich einen kleineren Außendurchmesser als der Flansch auf. Hierdurch wird einerseits verdeutlicht, dass das erste und das zweite axiale Ende über den Flansch vorstehen. Zudem wird hervorgehoben, dass der Flansch zur Anlage mindestens an dem Bauteil dient, in das die Befestigungshülse gesetzt wird. Vorzugsweise liegt ein weiteres oder zweites Bauteil bei Verwendung im Rahmen einer Verbindungsstruktur an der dem zweiten axialen Ende des Schafts zugewandten Seite des Flanschs vor.

In einer weiteren bevorzugten Ausführungsform der metallischen Befestigungshülse stellt das erste axiale Ende eine ringförmige Stanzfläche bereit. Zudem weist das erste axiale Ende mindestens eines der folgenden Merkmale auf: einen Innendurchmesser, der das 0,7-fache bis 0,8-fache des Außendurchmessers beträgt, einen Außendurchmesser zwischen 25 mm und 45 mm, einen Innendurchmesser zwischen 17 mm und 36 mm, und/oder die Stanzfläche beträgt mindestens 1,75 cm$^2$, vorzugsweise mindestens 2,5 cm$^2$ und besonders bevorzugt mindestens 3 cm$^2$. Aufgrund dieser Dimensionierungen wird deutlich, dass es sich bei der Befestigungshülse nicht um einen Stanzniet oder Halbhohlstanzniet handelt. Denn gerade ein Außendurchmesser zwischen 25 mm und 45 mm bedeutet, dass eine große Öffnung im Bauteil geschaffen wird. Dies spiegelt sich auch in dem bevorzugten Innendurchmesser sowie der dazugehörigen Stanzfläche wider.

Auch im Rahmen der Verwendung dieser Befestigungshülse werden die Unterschiede deutlich. Denn ausgehend von einem metallischen Bauteil und der Dimensionierung der Befestigungshülse am ersten axialen Ende sind hohe Stanzkräfte von circa 90 kN und noch höher Setzkräfte von ungefähr 120 kN zu erwarten. Kleinere Außendurchmesser im ersten Schaftbereich bergen jedoch die Gefahr, dass für die gewünschte Anwendung die Belastung oder Spannung im ersten Schaftbereich zu hoch wird, sodass sich dieser gegebenenfalls verformt. Der Vollständigkeit halber ist zu beachten, dass sich die Stanzfläche A berechnet als

$$A = \frac{\pi}{4}(D^2 - d^2) = \pi(R^2 - r^2).$$

D stellt hierbei den Außendurchmesser im ersten Schaftbereich, vorzugsweise am ersten axialen Ende, und d den Innendurchmesser im ersten Schaftbereich, vorzugsweise am ersten axialen Ende, dar. Entsprechend stellt R den Außenradius und r den Innenradius des ersten Schaftbereichs dar, vorzugsweise am ersten axialen Ende.

Vorteilhafterweise stellt das erste axiale Ende eine ringförmige Stanzfläche bereit und der erste Schaftbereich weist mindestens eines der folgenden Merkmale auf: eine Längsrändelung an seiner radialen Außenseite, eine Länge, die dem 0,2 bis 1,0-fachen einer Breite der ringförmigen Stanzfläche entspricht, und/oder eine Fase an der radialen Innenseite benachbart zum ersten axialen Ende. Die Längsrändelung auf der Außenseite sorgt für eine Verdrehsicherung im Bauteil. Die Fase am Innendurchmesser gewährleistet eine definierte Stanzbutzenbildung und unterstützt die Abfuhr des Stanzbutzens. Die Länge des ersten Schaftbereichs in Kombination mit der Breite der ringförmigen Stanzfläche sorgt für eine besonders hohe Stabilität des ersten Schaftbereichs, gerade im Hinblick auf ein Setzen in ein hochfestes metallisches Bauteil.

In einer weiteren bevorzugten Ausführungsform der selbststanzenden metallischen Befestigungshülse ist der Prägering ununterbrochen ausgebildet und weist mindestens eines der folgenden Merkmale auf: eine bogenförmige Kontur, die vorzugsweise einen Radius zwischen 1,0 und 2,5 mm aufweist, eine Höhe bezogen auf die dem ersten axialen Ende zugewandte Seite des Flanschs zwischen dem 0,0022-fachen und dem 0,05-fachen des Außendurchmesser am ersten axialen Ende, vorzugsweise zwischen dem 0,0067-fachen und dem 0,032-fachen, und/oder eine Höhe bezogen auf die dem ersten axialen Ende zugewandte Seite des Flanschs von 0,1 bis 0,8 mm. Gerade die bogenförmige Kontur und insbesondere in dem genannten Radiusbereich stellt sicher, dass genug Material des Bauteils verdrängt wird, um einen Kraftschluss im ersten Schaftbereich zu realisieren. Auch hier ist die Berücksichtigung des Außendurchmessers am ersten axialen Ende besonders vorteilhaft, da sich auf diese Weise eine besonders gute Abstimmung zwischen Stanzfläche am ersten axialen Ende und Verdrängungsverhalten beim Setzen der Befestigungshülse in das Bauteil ergibt.

Erfindungsgemäß weist die Befestigungshülse im ersten Schaftbereich eine umlaufende Ringnut auf, die vorzugsweise benachbart zum Flansch angeordnet und/oder ununterbrochen ausgebildet ist. Die Ringnut gewährleistet, dass der Kraftschluss zwischen dem Bauteil und dem ersten Schaftbereich der Befestigungshülse weiter verbessert ist. Dies gilt gerade dann, wenn die Ringnut benachbart zum Flansch angeordnet und/oder ununterbrochen ausgebildet ist. So wird beispielsweise gerade durch die Anordnung der Ringnut benachbart zum Flansch besonders wirksam sichergestellt, dass ausreichend viel Material des Bauteils durch den Prägering in die Ringnut verdrängt werden kann, wenn die Befestigungshülse in das Bauteil gesetzt wird.

In einer besonders bevorzugten Ausgestaltung der selbststanzenden metallischen Befestigungshülse, die eine Ringnut aufweist, umfasst die Ringnut mindestens eines der folgenden Merkmale: eine bogenförmige Kontur, die vorzugsweise einen Radius zwischen 1 mm und 2,5 mm aufweist, und/oder eine Tiefe im Bereich von ungefähr 0,1 mm. Der bevorzugte Bereich für den Radius der Ringnut stellt sicher, dass die Ringnut nicht zu filigrane Kanten aufweist und die Ringnut nicht zu klein ist, sodass kein Material des Bauteils in die Ringnut verdrängt werden kann. Im Hinblick auf die Tiefe ist festzuhalten, dass eine tiefere Ringnut grundsätzlich möglich ist, üblicherweise werden jedoch nur wenige hundertstel Millimeter Hinterschnitt benötigt. Daher ist auch eine geringe Ringnuttiefe grundsätzlich bevorzugt, solange durch den Prägering verdrängtes Material des Bauteils dorthin ausweichen kann.

Erfindungsgemäß gehen Prägering und Ringnut ineinander über. Im Hinblick auf die mit einer Ringnut versehene Befestigungshülse ist es weiterhin vorteilhaft, wenn diese Befestigungshülse mindestens eines der folgenden Merkmale aufweist: Prägering und Ringnut gehen unmittelbar ineinander über, in radialer Richtung betrachtet überschneiden sich die Höhe des Prägerings und die Höhe der Ringnut, so dass ein Hinterschnitt vorhanden ist, und/oder die Höhe der Ringnut liegt zwischen dem 4-fachen und dem 10-fachen der Höhe des Prägerings, vorzugsweise liegt die Höhe der Ringnut zwischen 0,4 mm und 8 mm. Insbesondere das unmittelbare Übergehen ineinander von Prägering und Ringnut stellt sicher, dass das Material des Bauteils besonders effektiv mit dem ersten Schaftbereich in Eingriff gelangen kann. Durch die Überschneidung der Höhe des Prägerings und der Höhe der Ringnut in radialer Richtung wird ein Hinterschnitt gebildet. Die Höhe des Prägerings beeinflusst dabei wieviel Material verdrängt wird. So wird bei einer zu geringen Höhe zu wenig Material des Bauteils umgeformt und die Befestigungshülse schlägt schnell am Bauteil an. Dies wirkt sich nachteilig auf die Befestigung der Befestigungshülse in dem Bauteil aus und ist an einem schnellen und starken Kraftanstieg ersichtlich.

In einer weiteren bevorzugten Ausführungsform der selbststanzenden metallischen Befestigungshülse weist der Flansch auf der dem ersten axialen Ende des Schafts zugewandten Seite und/oder der dem zweiten axialen Ende des Schafts zugewandten Seite eine Profilierung als Verdrehsicherungskontur auf, vorzugsweise in Form einer Nockenfläche und/oder in Form von sich in radialer Richtung erstreckenden Rippen. In Abhängigkeit von der Seite, auf der die Profilierung am Flansch angeordnet ist, dient die Profilierung auf dem Flansch als Verdrehsicherung am ersten Bauteil, was besonders bevorzugt in Kombination mit einer Längsrändelung am Schaft ist, oder als Verdrehsicherung an einem weiteren oder zweiten Bauteil, sofern dieses im Rahmen einer entsprechenden Verbindungsstruktur am Flansch anliegt. Gerade die Ausgestaltung der Verdrehsicherungskontur als Nockenfläche und/oder als sich radial erstreckende Rippen stellt eine besonders effiziente Verdrehsicherung bereit.

Vorteilhafterweise weist die Befestigungshülse einen weiteren Prägering auf der dem ersten axialen Ende des Schafts zugewandten Seite des Flanschs auf, der radial außen bezogen auf den ersten Prägering angeordnet ist. Das Vorhandensein eines weiteren bzw. zweiten Prägerings sorgt für eine höhere Dichtheit, was gerade bei gewünschten fluiddichten Verbindungen, d.h. flüssigkeits- und oder gasdichten Verbindungen, bevorzugt ist

Schließlich ist es bevorzugt, dass die selbststanzende metallische Befestigungshülse aus einem metallischen Material mit einer Vickers-Härte HV 10 gemäß DIN EN ISO 6507-1 von ungefähr 320 besteht, insbesondere aus einem Mangan-Bor-Stahl. Dies wird erreicht, indem die Befestigungshülse mittels Kaltschlagen und anschließendem Vergüten hergestellt wird. Bei dem Material für die Befestigungshülse handelt es sich daher bevorzugt um einen Vergütungsstahl und besonders bevorzugt um einen Mangan-Bor-Stahl.

Das Material für die Befestigungshülse ist gerade in Kombination mit einem hochfesten Material für das Bauteil wichtig, um ein Setzen der Befestigungshülse in das Bauteil sicherzustellen. Dies gilt gerade im Hinblick auf ein Bauteil mit einer Zugfestigkeit von ungefähr 600 MPa, wie beispielsweise ein Bauteil aus einem DP 600 Stahl. Noch wichtiger ist diese Ausgestaltung der Befestigungshülse, wenn diese in ein hochfestes metallisches Bauteil, wie ein Bauteil aus einem DP 800 Stahl oder ein Bauteil mit einer noch höheren Zugfestigkeit, gesetzt werden soll. So wird bei einem Bauteil aus DP 600 Stahl und einer Befestigungshülse mit einem Außendurchmesser im ersten Schaftbereich von 26 mm eine Kraft von ungefähr 90 kN zum Ausstanzen des Stanzbutzens benötigt. Um die Befestigungshülse danach verliersicher im Bauteil zu befestigen, ist eine Kraft von circa 120 kN erforderlich. Neben der Dimensionierung der Befestigungshülse ist daher auch die Wahl des Materials für die Befestigungshülse wichtig.

Ein erfindungsgemäßes erstes Bauteil weist eine darin gesetzte erfindungsgemäße selbststanzende metallische Befestigungshülse auf. Vorteilhafterweise ist das erste Bauteil ein metallisches Bauteil, vorzugsweise aus einem DP 600 oder DP 800-Stahl und besonders bevorzugt ein hochfestes metallisches Bauteil. Zudem ist das erste Bauteil in dem Bereich, in den die erfindungsgemäße Befestigungshülse gesetzt werden soll, vorzugsweise nicht vorgelocht. Da in dem erfindungsgemäßen ersten Bauteil die erfindungsgemäße Befestigungshülse verwendet wird, wird im Hinblick auf die sich ergebenden technischen Effekte und Vorteile auf die obigen Ausführungen verwiesen, um Wiederholungen zu vermeiden.

Eine erfindungsgemäße Verbindungsstruktur besteht aus einem erfindungsgemäßen ersten Bauteil und einem zweiten Bauteil, die über den Funktionsbereich der Befestigungshülse direkt oder indirekt miteinander verbunden sind. Auch in dieser Hinsicht verweisen wir auf die obigen Ausführungen hinsichtlich der technischen Effekte und Vorteile, da die erfindungsgemäße Verbindungsstruktur das erfindungsgemäße erste Bauteil und somit auch die erfindungsgemäße Befestigungshülse umfasst.

Ein erfindungsgemäßes Setzverfahren zur Befestigung der erfindungsgemäßen Befestigungshülse in einem Bauteil umfasst die Schritte: Bereitstellen des Bauteils, vorzugsweise ohne Vorlochung, sowie der erfindungsgemäßen Befestigungshülse, Eintreiben der Befestigungshülse mit dem ersten axialen Ende voraus in das Bauteil, so dass ein Stanzbutzen abgetrennt wird, und Einpressen des Prägerings in das Bauteil, wodurch Material des Bauteils in Richtung des ersten Schaftbereichs verdrängt wird und die Befestigungshülse aufgrund eines Kraftschlusses verliersicher im Bauteil angeordnet ist. Vorzugsweise, und wenn die Befestigungshülse weiterhin eine Ringnut aufweist, wird während des Schritts des Einpressens des Prägerings in das Bauteil zusätzlich Material des Bauteils in die Ringnut verdrängt. Mit dem erfindungsgemäßen Setzverfahren wird die Verbindung zwischen der Befestigungshülse und dem Bauteil hergestellt. Daher wird auch in dieser Hinsicht auf die obigen Diskussionen sowie das erfindungsgemäße erste Bauteil verwiesen.

4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:

Figur 1      eine perspektivische Ansicht einer ersten Ausführungsform einer erfindungsgemäßen Befestigungshülse,

Figur 2      eine Schnittansicht der Ausführungsform gemäß Figur 1,

Figur 3      eine vergrößerte Schnittansicht des eingekreisten Bereichs aus Figur 2,

Figur 4a      eine Schnittansicht einer ersten Ausgestaltung eines Setzwerkzeugs zum Setzen der Befestigungshülse gemäß Figur 1,

Figur 4b      eine Schnittansicht einer zweiten Ausgestaltung eines Setzwerkzeugs zum Setzen der Befestigungshülse gemäß Figur 1,

Figur 4c     eine Schnittansicht einer dritten Ausgestaltung eines Setzwerkzeugs zum Setzen der Befestigungshülse gemäß Figur 1,

Figur 5     unterschiedliche Zustände während des Setzverfahrens der Befestigungshülse gemäß Figur 1 in Schnittansicht,

Figur 6     eine vergrößerte Schnittansicht des eingekreisten Bereichs der zweiten Darstellung von links aus Figur 5,

Figur 7     einen Ausschnitt einer weiteren Ausführungsform einer erfindungsgemäßen Befestigungshülse in Schnittansicht,

Figur 8     eine Schnittansicht einer Ausführungsform einer erfindungsgemäßen Verbindungsstruktur und

Figur 9     einen schematischen Verfahrensablauf einer Ausführungsform eines erfindungsgemäßen Setzverfahrens.

## 5. Detaillierte Beschreibung der bevorzugten Ausführungsformen

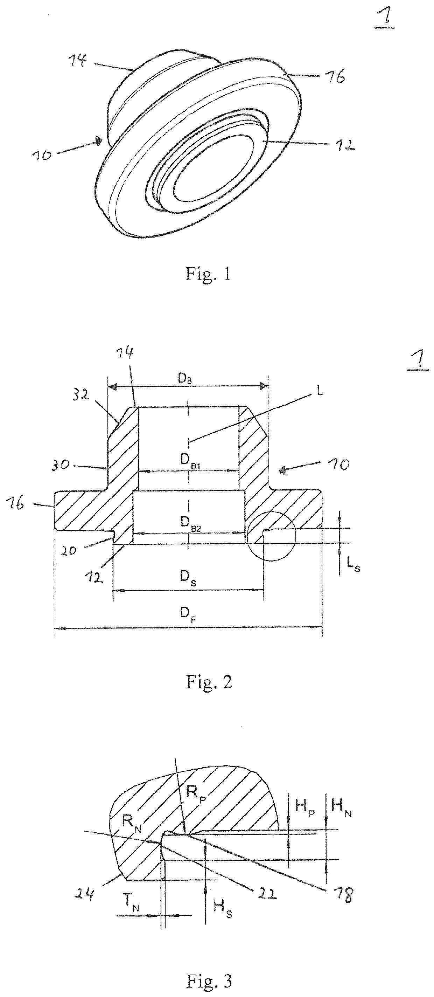

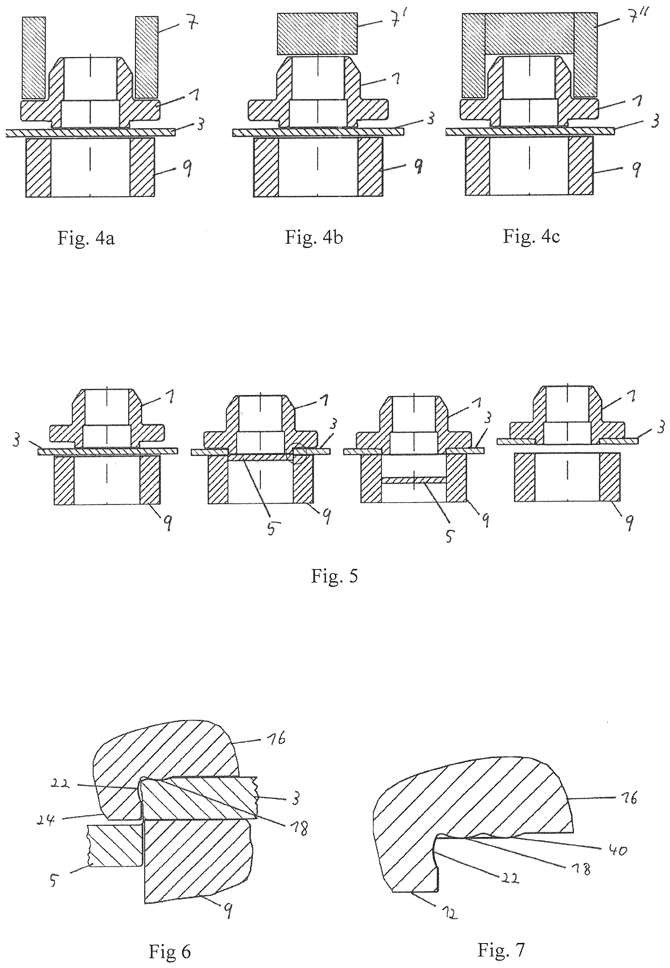

Nachfolgend und bezugnehmend auf die Figuren 1 bis 3 wird eine erste Ausführungsform einer erfindungsgemäßen Befestigungshülse 1 detailliert hinsichtlich ihres Aufbaus beschrieben. Im Anschluss daran werden unter Bezugnahme auf die Figuren 4a bis 4c das Setzwerkzeug und unter Bezugnahme auf die Figuren 5 und 6 die Zustände während des Setzens der Befestigungshülse 1 erläutert.

Bei der Befestigungshülse 1 handelt es sich um eine durch Kaltschlagen hergestellte selbststanzende metallische Befestigungshülse 1. Nach dem Kaltschlagen wurde das Material der Befestigungshülse 1 vergütet, um vorzugsweise eine Vickers-Härte HV 10 gemäß DIN EN ISO 6507-1 von ungefähr 320 zu erreichen. Bei dem Material für die Befestigungshülse 1 handelt es sich daher bevorzugt um einen Vergütungsstahl und besonders bevorzugt um einen Mangan-Bor-Stahl. Der Vollständigkeit halber wird in diesem Zusammenhang darauf hingewiesen, dass ein Herstellen der Befestigungshülse 1 mittels Drehen aufgrund der konstruktiven Merkmale nicht kosteneffektiv realisierbar ist.

Die Befestigungshülse 1 ist angepasst, um in einem metallischen Bauteil 3, vorzugsweise in einem hochfesten metallischen Bauteil 3, eine Öffnungsverstärkung zu bilden. Das Bauteil 3 besteht beispielsweise aus einem Metall mit einer Zugfestigkeit von 600 MPa, wie einem DP 600 Stahl. Alternativ besteht das Bauteil 3 aus einem DP 800 Stahl oder einem anderen vorzugsweise hochfesten Metall.

Die Befestigungshülse 1 soll in diesem Bauteil 3 verliersicher befestigt werden, um später die Verbindung zu einem weiteren bzw. zweiten Bauteil 50 zu ermöglichen. Dazu umfasst die Befestigungshülse 1 einen hohlzylindrischen Schaft 10 mit einem ersten axialen Ende 12 und einem zweiten axialen Ende 14, der eine zentrale Längsachse L definiert. Ein Flansch 16 ist zwischen dem ersten 12 und dem zweiten axialen Ende 14 angeordnet und geschlossen um den Schaft 10 umlaufend ausgebildet. Der Flansch 16 kann auf der dem ersten axialen Ende 12 des Schafts 10 zugewandten Seite und/oder auf der dem zweiten axialen Ende 14 des Schafts 10 zugewandten Seite eine Profilierung als Verdrehsicherungskontur aufweisen. Die entsprechende Profilierung liegt vorzugsweise in Form einer Nockenfläche und/oder in Form von sich in radialer Richtung erstreckenden Rippen vor.

Wie in den Figuren 1 bis 3 erkennbar, stehen das erste 12 und das zweite axiale Ende 14 über den Flansch 16 vor. Ein erster Schaftbereich 20 ist daher zwischen dem Flansch 16 und dem ersten axialen Ende 12 vorhanden. Dieser stellt einen Stanz- und Befestigungsbereich zur verliersicheren Befestigung der Befestigungshülse 1 an dem metallischen Bauteil 3 bereit. Wie später detailliert erläutert wird, ist gerade aufgrund der Dimensionierung des Stanz- und Befestigungsbereich dieser nicht radial aufweitbar.

Ein zweiter Schaftbereich 30 ist zwischen dem Flansch 16 und dem zweiten axialen Ende 14 vorhanden und stellt einen Funktionsbereich bereit. Dieser Funktionsbereich dient später im Rahmen einer Verbindungsstruktur dazu, das Bauteil 3 mit der Befestigungshülse 1 mit dem weiteren bzw. zweiten Bauteil 50 direkt oder indirekt zu verbinden. In der dargestellten Ausführungsform weist der zweite Schaftbereich 30 benachbart zum zweiten axialen Ende 14 eine Fase 32 an der radialen Außenseite auf.

Ein Außendurchmesser $D_S$ des ersten Schaftbereichs 20 und ein Außendurchmesser $D_B$ des zweiten Schaftbereichs 30 sind kleiner als ein Außendurchmesser $D_F$ des Flanschs 16. Auch hierdurch wird betont, dass der erste 20 und der zweite Schaftbereich 30 und somit das erste 12 und das zweite axiale Ende 14 über den Flansch 16 vorstehen. In diesem Zusammenhang ist es besonders bevorzugt, wie in den Figuren 1 bis 3 dargestellt, dass der Außendurchmesser $D_S$ des ersten Schaftbereichs 20 kleiner ist als der Außendurchmesser $D_B$ des zweiten Schaftbereichs 30.

Das erste axiale Ende 12 weist einen Innendurchmesser $D_{B2}$ auf und stellt somit eine ringförmige Stanzfläche bereit. Diese dient dazu, einen Stanzbutzen aus dem Bauteil 3 bei einem Setzen der Befestigungshülse 1 in das Bauteil 3 abzutrennen, da das Bauteil 3 im Befestigungsbereich der Befestigungshülse 1 nicht vorgelocht ist. Die ringförmige Stanzfläche A berechnet sich im vorliegenden Fall gemäß der Formel:

$$A = \frac{\pi}{4}\left(D_S{}^2 - D_{B2}{}^2\right).$$

Der Innendurchmesser $D_{B2}$ liegt beispielhaft zwischen dem 0,7-fachen bis 0,8-fachen des Außendurchmessers $D_S$ ist. Vorzugsweise liegt der Außendurchmesser $D_S$ zwischen 25 und 45 mm. Für einen Innendurchmesser $D_{B2}$ ist ein Wertebereich zwischen 17 mm und 36 mm bevorzugt. Die sich daraus ergebende Stanzfläche beträgt mindestens 1,75 cm², vorzugsweise mindestens 2,5 cm² und besonders bevorzugt mindestens 3 cm². Bei einem beispielhaften Außendurchmesser $D_S$ von 27 mm und einem beispielhaften Innendurchmesser $D_{B2}$ von 20 mm liegt der Innendurchmesser $D_{B2}$ beim 0,74-fachen des Außendurchmesser $D_S$. Die dazugehörige Stanzfläche A beträgt 2,58 cm².

Ein kleinerer Außendurchmesser $D_S$ des ersten Schaftbereichs 20 führt zu höheren Belastungen und Spannungen, sodass sich dieser gegebenenfalls verformt. Daher ist gerade diese Dimensionierung bevorzugt. Allerdings ist zu berücksichtigen, dass bei einer Vergrößerung des Außendurchmessers $D_S$ die erforderlichen Stanzkräfte deutlich erhöht werden, worauf später eingegangen wird.

Der Vollständigkeit halber ist festzuhalten, dass der zweite Schaftbereich 30 ebenfalls einen Innendurchmesser $D_{B1}$ aufweist. Dieser ist kleiner als der Innendurchmesser $D_{B2}$ des ersten Schaftbereichs 20, so dass eine Stufe im Inneren des Schafts 10 vorhanden ist. Der Innendurchmesser $D_{B1}$ im zweiten Schaftbereich 30 liegt beispielhaft bei 18 mm. Da, wie oben erwähnt, der Außendurchmesser $D_B$ des zweiten Schaftbereichs 30 größer ist als der Außendurchmesser $D_S$ des ersten Schaftbereichs 20, liegt dieser beispielhaft bei 29 mm.

Selbstverständlich ist es möglich, dass ein Innendurchmesser im ersten 20 und im zweiten Schaftbereich 30 gleich ist. Bei dieser Ausgestaltung liegt somit keine Stufe an einem Übergang vom ersten Schaftbereich 20 zum zweiten Schaftbereich 30 vor.

Wie in Figur 6 ersichtlich, weist der erste Schaftbereich 20 eine Fase 24 an der radialen Innenseite benachbart zum ersten axialen Ende 12 auf. Hierdurch kann sowohl die Bildung des Stanzbutzens wie auch seine Abfuhr gezielt beeinflusst werden.

Um einen späteren Halt der Befestigungshülse 1 in dem Bauteil 3 positiv zu beeinflussen, kann der erste Schaftbereich 20 eine Längsrändelung an seiner radialen Außenseite aufweisen. Diese stellt später eine Verdrehsicherungen der Befestigungshülse 1 im ersten Bauteil 3 bereit.

Der erste Schaftbereich 20 muss im Rahmen des Stanz- und Setzvorgangs große Kräfte aufnehmen. Daher ist es im Hinblick auf eine Dimensionierung des ersten Schaftbereichs 20 bevorzugt, dass dieser eine Länge $L_S$ aufweist, die dem 0,2-fachen bis 1,0-fachen einer Breite der ringförmigen Stanzfläche entspricht. Ausgehend von dem obigen Beispiel mit einem Außendurchmesser $D_S$ von 27 mm und einem Innendurchmesser $D_{B2}$ von 20 mm liegt die Breite der ringförmigen Stanzfläche bei (27 mm - 20 mm)/2 = 3,5 mm. Die Länge $L_S$ sollte somit zwischen 0,7 mm und 3,5 mm liegen. Beispielhaft liegt die Länge $L_S$ bei 2,5 mm, was dem 0,71-fachen der Breite der ringförmigen Stanzfläche entspricht.

Der Flansch 16 weist auf der dem ersten axialen Ende 12 zugewandten Seite einen Prägering 18 auf. Dieser ist benachbart zum Schaft 10 angeordnet. Beispielsweise ist eine radiale Außenseite des Prägerings 18 bei einem Durchmesser von 31 mm angeordnet. Der Prägering 18 ist ununterbrochen ausgebildet und weist eine bogenförmige Kontur auf. Ein Radius $R_P$ des Prägerings 18 liegt zwischen 1,0 mm und 2,5 mm. Beispielhaft liegt der Radius $R_P$ bei 1,8 mm.

Eine Höhe $H_P$ des Prägerings 18 liegt bezogen auf die dem ersten axialen Ende 12 zugewandten Seite des Flanschs 16 zwischen dem 0,0022-fachen und dem 0,05-fachen des Außendurchmesser $D_S$ am ersten axialen Ende 12 und vorzugsweise zwischen dem 0,0067-fachen und dem 0,032-fachen. In einer bevorzugten Ausgestaltung liegt die Höhe $H_P$ des Prägerings 18 zwischen 0,1 mm und 0,8 mm. Beispielhaft liegt die Höhe $H_P$ des Prägerings 18 bei 0,2 mm. Hieraus ergibt sich bezugnehmend auf den beispielhaften Außendurchmesser $D_S$ von 27 mm ein Faktor von 0,0074. Aufgrund des so dimensionierten Prägerings 18 wird das Material des Bauteils 3 beim Setzen der Befestigungshülse 1 in das Bauteil 3 besonders effektiv in Richtung des ersten Schaftbereichs 20 verdrängt und die Befestigungshülse 1 kraftschlüssig im Bauteil 3 befestigt.

Zusammenfassend ist festzuhalten, dass die Kombination aus Radius $R_P$, Höhe $H_P$ und Position des Prägerings 18 sicherstellt, dass ausreichend Material des Bauteils 3 in Richtung des ersten Schaftbereichs 20 verdrängt werden kann, um die Befestigungshülse 1 verliersicher im Bauteil 3 anzuordnen.

Um diesen Effekt zu verstärken, ist in der Befestigungshülse 1 im ersten Schaftbereich 20 eine umlaufende Ringnut 22 vorgesehen. Diese ist benachbart zum Flansch 16 angeordnet und ununterbrochen ausgebildet. Alternativ kann dieser auch unterbrochen ausgebildet sein.

Die Ringnut 22 weist eine bogenförmige Kontur auf, die vorzugsweise einen Radius $R_N$ zwischen 1 mm und 2,5 mm hat. Eine Tiefe $T_N$ der Ringnut 22 liegt im Bereich von ungefähr 0,1 mm. Durch diese Dimensionierung der Ringnut 22 ist sichergestellt, dass genug Material in die Ringnut 22 verdrängt werden kann und andererseits die Ringnut 22 gut herstellbar ist.

Die Materialaufnahme in der Ringnut 22 wird weiter durch die Dimensionierung einer Höhe $H_N$ der Ringnut 22 bestimmt. So liegt die Höhe $H_N$ der Ringnut 22 vorzugsweise zwischen 0,4 mm und 8 mm. Beispielhaft beträgt die Höhe $H_N$ 1,5 mm. Im Hinblick auf die genannte Gesamtlänge $L_S$ des ersten Schaftbereichs 20 setzt sich diese daher aus der Höhe $H_N$ der Ringnut 22 und einer Höhe $H_S$ zwischen erstem axialen Ende 12 und Ringnut 22 zusammen. Ausgehend von einer Höhe $H_N$ der Ringnut 22 von 1,5 mm und einer Gesamtlänge $L_S$ von 2,5 mm liegt die Höhe $H_S$ bei 1,0 mm.

Im Hinblick auf das Zusammenwirken zwischen Prägering 18 und Ringnut 22 ist es wesentlich, wie in der dargestellten Ausführungsform ersichtlich, dass beide ineinander übergehen. Vorzugsweise gehen der Prägering 18 und die Ringnut 22 unmittelbar ineinander über. Sofern ein Übergang vorhanden ist, sollte dieser möglichst klein gehalten werden. Dies ist darin begründet, dass der Prägering 18 einerseits möglichst nah am Schaft 10 angeordnet sein soll, andererseits aber die Ringnut 22 nicht versperren soll.

Gerade bezugnehmend auf Figur 3 wird deutlich, dass sich dazu die Höhe $H_P$ des Prägerings 18 und die Höhe $H_N$ der Ringnut 22 in radialer Richtung betrachtet überschneiden, sodass ein Hinterschnitt vorhanden ist. Auf diese Weise kann die Befestigungshülse 1 besonders effektiv im Bauteil 3 kraftschlüssig befestigt werden.

Dazu ist es bevorzugt, dass die Höhe $H_N$ der Ringnut 22 zwischen dem 4-fachen und dem 10-fachen der Höhe $H_P$ des Prägerings 18 liegt. So liegt die Höhe $H_N$ der Ringnut 22 vorzugsweise zwischen 0,4 mm und 8 mm. Beispielhaft beträgt die Höhe 1,5 mm, was zu einem Faktor von 7,5 führt.

Nun bezugnehmend auf die Figuren 4a bis 4c sind drei Ausgestaltungen eines Setzwerkzeugs in Schnittansicht gezeigt. Das Setzwerkzeug dient zum Setzen der Befestigungshülse 1 in das Bauteil 3 und umfasst einen Stempel 7; 7'; 7" und eine Matrize 9. Gemäß den verschiedenen Ausgestaltungen kann der Stempel 7 hohlzylindrisch ausgestaltet sein, wie in Figur 4a dargestellt. In diesem Fall greift der Stempel 7 am Flansch 16 der Befestigungshülse 1 an. In der Ausführungsform gemäß Figur 4b ist der Stempel 7' so ausgestaltet, dass er ausschließlich am zweiten axialen Ende 14 der Befestigungshülse 1 angreift. Schließlich zeigt Figur 4c einen Stempel 7", der sowohl am Flansch 16 wie auch am zweiten axialen Ende 14 der Befestigungshülse 1 angreift. Die Matrize 9 ist hohlzylindrisch ausgebildet, um das Abführen eines Stanzbutzens 5 zu ermöglichen.

Nachfolgend wird das Setzverfahren unter Bezugnahme auf Figur 5 erläutert, in der der Stempel aus Übersichtlichkeitsgründen weggelassen wurde. Von links nach rechts zeigt Figur 5 zunächst den Ausgangszustand. Hier ist das Bauteil 3 auf der Matrize 9 angeordnet und die Befestigungshülse 1 befindet sich benachbart dazu. Das erste axiale Ende 12 der Befestigungshülse 1 liegt dazu an dem Bauteil 3 an.

Nun wird die Befestigungshülse in das Bauteil 3 getrieben, wobei der Stanzbutzen 5 abgetrennt wird. Dieser Zustand ist vergrößert in Figur 6 dargestellt.

Nach dem Abtrennen des Stanzbutzens 5 wird der Prägering 18 in das Bauteil 3 gepresst, wodurch Material des Bauteils 3 in Richtung des ersten Schaftbereichs 20 verdrängt und die Befestigungshülse 1 aufgrund eines Kraftschlusses verliersicher am Bauteil 3 angeordnet wird.

Figur 7 zeigt eine Ausführungsform der Befestigungshülse mit einem zweiten Prägering 40. Dieser dient insbesondere dazu, eine höhere Dichtheit im Hinblick auf Fluide zu erzielen.

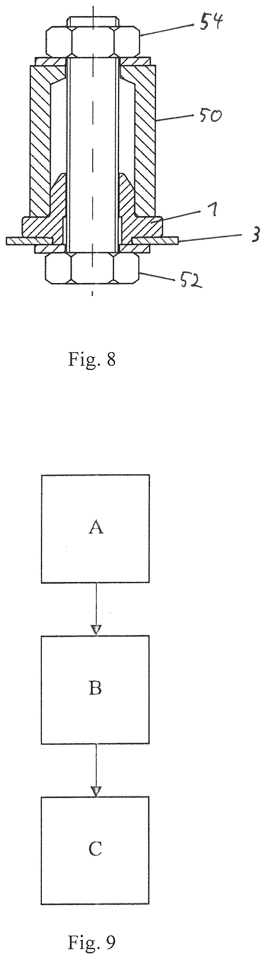

Eine Ausführungsform einer Verbindungsstruktur ist in Figur 8 in Schnittansicht gezeigt. Hier ist das Bauteil 3 mit der darin befestigten Befestigungshülse 1 mit dem zweiten Bauteil 50 verbunden. Die Befestigung erfolgt über eine Schraube 52 in Verbindung mit einer Mutter 54 als Befestigungsmittel.

Schließlich und bezugnehmend auf Figur 9 wird ein Ablauf einer Ausführungsform eines erfindungsgemäßen Setzverfahren erläutert. Hierzu werden in einem ersten Schritt A das Bauteil 3, vorzugsweise ohne Vorlochung, sowie die Befestigungshülse 1 bereitgestellt. Danach erfolgt in Schritt B ein Eintreiben der Befestigungshülse 1 mit dem ersten axialen Ende 12 voraus in das Bauteil 3, so dass ein Stanzbutzen 5 abgetrennt wird.

Nachfolgend wird der Prägering 18 in das Bauteil 3 gepresst, wodurch Material des Bauteils 3 in Richtung des ersten Schaftbereichs 20 verdrängt wird und die Befestigungshülse 1 aufgrund eines Kraftschlusses verliersicher im Bauteil 3 angeordnet ist. Vorzugsweise, und wenn die Befestigungshülse 1 weiterhin die Ringnut 22 aufweist, wird während des Schritts des Einpressens des Prägerings 18 in das Bauteil 3 zusätzlich Material des Bauteils 3 in die Ringnut 22 verdrängt.

## 6. Bezugszeichenliste

1 Befestigungshülse
3 Bauteil
5 Stanzbutzen
7 Stempel
9 Matrize

10 Schaft
12 erstes axiales Ende
14 zweites axiales Ende
16 Flansch
18 Prägering

20 erster Schaftbereich
22 Ringnut
24 Fase

30 zweiter Schaftbereich
32 Fase

40 weiterer bzw. zweiter Prägering
50 zweites Bauteil
52 Schraube
54 Mutter

$D_B$     Außendurchmesser zweiter Schaftbereich 30
$D_{B1}$    Innendurchmesser zweiter Schaftbereich 30
$D_{B2}$    Innendurchmesser erster Schaftbereich 20
$D_F$     Außendurchmesser Flansch 16
$D_S$     Außendurchmesser erster Schaftbereich 20

$H_N$     Höhe Ringnut 22
$H_P$     Höhe Prägering 18
$H_S$     Höhe des ersten Schaftbereichs 20 zwischen erstem axialen Ende 12 und Ringnut 22

L     zentrale Längsachse
$L_S$     Länge bzw. Höhe des ersten Schaftbereichs 20

$R_N$     Radius der Ringnut 22
$R_P$     Radius des Prägerings 18

$T_N$     Tiefe der Ringnut 22

**Patentansprüche**

1. Eine selbststanzende metallische Befestigungshülse (1), die angepasst ist, um in einem metallischen Bauteil (3), vorzugsweise in einem hochfesten metallischen Bauteil (3), eine Öffnungsverstärkung zu bilden, und die die folgenden Merkmale aufweist:

   a) einen hohlzylindrischen Schaft (10) mit einem ersten (12) und einem zweiten axialen Ende (14),
   b) einen Flansch (16), der zwischen dem ersten (12) und dem zweiten axialen Ende (14) angeordnet und geschlossen um den Schaft (16) umlaufend ausgebildet ist, wobei
   c) das erste (12) und das zweite axiale Ende (14) über den Flansch (16) vorstehen, und
   d) ein erster Schaftbereich (20) zwischen dem Flansch (16) und dem ersten axialen Ende (12) stellt einen Stanz- und Befestigungsbereich zur verliersicheren Befestigung der Befestigungshülse (1) an dem metallischen Bauteil (3) bereit, wobei der Stanz- und Befestigungsbereich vorzugsweise nicht radial aufweitbar ist, und ein zweiter Schaftbereich (30) zwischen dem Flansch (16) und dem zweiten axialen Ende (14) stellt einen Funktionsbereich bereit, **dadurch gekennzeichnet, dass**
   e) der Flansch (16) auf der dem ersten axialen Ende (12) zugewandten Seite einen Prägering (18) aufweist, der benachbart zum Schaft (10) angeordnet ist, und
   f) die Befestigungshülse (1) weist im ersten Schaftbereich (20) eine umlaufende Ringnut (22) auf, wobei
   g) Prägering (18) und Ringnut (22) ineinander übergehen.

2. Die selbststanzende metallische Befestigungshülse (1) gemäß Patentanspruch 1, bei der ein Außendurchmesser ($D_S$) des ersten Schaftbereichs (20) und ein Außendurchmesser ($D_B$) des zweiten Schaftbereichs (30) kleiner sind als ein Außendurchmesser ($D_F$) des Flanschs (16), wobei vorzugsweise der Außendurchmesser ($D_S$) des ersten Schaftbereichs (20) kleiner ist als der Außendurchmesser ($D_B$) des zweiten Schaftbereichs (30).

3. Die selbststanzende metallische Befestigungshülse (1) gemäß einem der vorhergehenden Patentansprüche, bei der das erste axiale Ende (12) eine ringförmige Stanzfläche bereitstellt und das erste axiale Ende (12) weist mindestens eines der folgenden Merkmale auf:

   a) einen Innendurchmesser ($D_{B2}$), der das 0,7-fache bis 0,8-fache des Außendurchmessers ($D_S$) beträgt,
   b) einen Außendurchmesser ($D_S$) zwischen 25 mm und 45 mm,
   c) einen Innendurchmesser ($D_{B2}$) zwischen 17 mm und 36 mm, und/oder
   d) die Stanzfläche beträgt mindestens 1,75 cm$^2$, vorzugsweise mindestens 2,5 cm$^2$ und besonders bevorzugt mindestens 3 cm$^2$.

4. Die selbststanzende metallische Befestigungshülse (1) gemäß einem der vorhergehenden Patentansprüche, bei der das erste axiale Ende (12) eine ringförmige Stanzfläche bereitstellt und der erste Schaftbereich (20) mindestens eines der folgenden Merkmale aufweist:

   a) eine Längsrändelung an seiner radialen Außenseite,
   b) eine Länge ($L_S$), die dem 0,2 bis 1,0-fachen einer Breite der ringförmigen Stanzfläche entspricht, und/oder
   c) eine Fase (24) an der radialen Innenseite benachbart zum ersten axialen Ende (12).

5. Die selbststanzende metallische Befestigungshülse (1) gemäß einem der vorhergehenden Patentansprüche, wobei der Prägering (18) ununterbrochen ausgebildet ist und mindestens eines der folgenden Merkmale aufweist:

   a) eine bogenförmige Kontur, die vorzugsweise einen Radius ($R_P$) zwischen 1,0 und 2,5 mm aufweist,
   b) eine Höhe ($H_P$) bezogen auf die dem ersten axialen Ende (12) zugewandte Seite des Flanschs (16) zwischen dem 0,0022-fachen und dem 0,05-fachen des Außendurchmessers ($D_S$) am ersten axialen Ende (12), vorzugsweise zwischen dem 0,0067-fachen und dem 0,032-fachen, und/oder

c) eine Höhe ($H_P$) bezogen auf die dem ersten axialen Ende (12) zugewandte Seite des Flanschs (16) von 0,1 bis 0,8 mm.

6. Die selbststanzende metallische Befestigungshülse (1) gemäß einem der vorhergehenden Patentansprüche, wobei die Ringnut (22) benachbart zum Flansch (16) angeordnet und/oder ununterbrochen ausgebildet ist.

7. Die selbststanzende metallische Befestigungshülse (1) gemäß einem der vorhergehenden Patentansprüche, bei der die Ringnut (22) mindestens eines der folgenden Merkmale aufweist:

a) eine bogenförmige Kontur, die vorzugsweise einen Radius ($R_N$) zwischen 1 mm und 2,5 mm aufweist, und/oder
b) eine Tiefe ($T_N$) im Bereich von ungefähr 0,1 mm.

8. Die selbststanzende metallische Befestigungshülse (1) gemäß einem der vorhergehenden Patentansprüche, die mindestens eines der folgenden Merkmale aufweist:

a) Prägering (18) und Ringnut (22) gehen unmittelbar ineinander über,
b) in radialer Richtung betrachtet überschneiden sich die Höhe ($H_P$) des Prägerings (18) und die Höhe ($H_N$) der Ringnut (22), so dass ein Hinterschnitt vorhanden ist, und/oder
c) die Höhe ($H_N$) der Ringnut (22) liegt zwischen dem 4-fachen und dem 10-fachen der Höhe ($H_P$) des Prägerings (18), vorzugsweise liegt die Höhe ($H_N$) der Ringnut (22) zwischen 0,4 mm und 8 mm.

9. Die selbststanzende metallische Befestigungshülse (1) gemäß einem der vorhergehenden Patentansprüche, bei der der Flansch (16) auf der dem ersten axialen Ende (12) des Schafts (10) zugewandten Seite und/oder der dem zweiten axialen Ende (14) des Schafts (10) zugewandten Seite eine Profilierung als Verdrehsicherungskontur aufweist, vorzugsweise in Form einer Nockenfläche und/oder in Form von sich in radialer Richtung erstreckenden Rippen.

10. Die selbststanzende metallische Befestigungshülse (1) gemäß einem der vorhergehenden Patentansprüche, die einen weiteren Prägering (40) auf der dem ersten axialen Ende (12) des Schafts (10) zugewandten Seite des Flanschs (16) aufweist, der radial außen bezogen auf den ersten Prägering (18) angeordnet ist.

11. Die selbststanzende metallische Befestigungshülse (1) gemäß einem der vorhergehenden Patentansprüche, die aus einem metallischen Material mit einer Vickers-Härte HV 10 gemäß DIN EN ISO 6507-1 von ungefähr 320 besteht, insbesondere aus einem Mangan-Bor-Stahl.

12. Ein erstes Bauteil (3), das eine darin gesetzte selbststanzende metallische Befestigungshülse (1) gemäß einem der vorhergehenden Patentansprüche aufweist.

13. Das erste Bauteil (3) gemäß Patentanspruch 12, wobei das erste Bauteil (3) ein metallisches Bauteil (3) ist, vorzugsweise aus einem DP600 oder DP800-Stahl und besonders bevorzugt ein hochfestes metallisches Bauteil.

14. Eine Verbindungsstruktur aus einem ersten Bauteil (3) gemäß einem der vorherigen Patentansprüche 12 oder 13 und einem zweiten Bauteil (50), die über den Funktionsbereich der Befestigungshülse (1) direkt oder indirekt miteinander verbunden sind.

15. Ein Setzverfahren zur Befestigung der Befestigungshülse (1) gemäß einem der Patentansprüche 1 bis 11 in einem Bauteil (3), das die Schritte umfasst:

a) Bereitstellen des Bauteils (3), vorzugsweise ohne Vorlochung, sowie der Befestigungshülse gemäß (1) einem der Patentansprüche 1 bis 11,
b) Eintreiben der Befestigungshülse (1) mit dem ersten axialen Ende (12) voraus in das Bauteil (3), so dass ein Stanzbutzen (5) abgetrennt wird, und
c) Einpressen des Prägerings (18) in das Bauteil (3), wodurch Material des Bauteils (3) in Richtung des ersten Schaftbereichs (20) verdrängt wird und die Befestigungshülse (1) aufgrund eines Kraftschlusses verliersicher im Bauteil (3) angeordnet ist.

16. Das Setzverfahren gemäß Patentanspruch 15, wobei die Befestigungshülse (1) weiterhin eine Ringnut (22) aufweist, so dass während des Schritts des Einpressens des Prägerings (18) in das Bauteil (3) zusätzlich Material des Bauteils (3) in die Ringnut (22) verdrängt wird.

**Claims**

1. A self-piercing metal fastening sleeve (1) which is adapted to form an opening reinforcement in a metallic component (3), preferably a high-strength metallic component (3), and which comprises the following features:

a) a hollow-cylindrical shaft (10) with a first (12) and a second axial end (14),
b) a flange (16) which is arranged between the first (12) and the second axial end (14) and is circumferentially formed in a closed manner around the shaft (16), wherein
c) the first (12) and the second axial end (14) project beyond the flange (16), and
d) a first shaft portion (20) between the flange (16) and the first axial end (12) provides a piercing and fastening portion for the loss-proof fastening of the fastening sleeve (1) at the metallic component (3) wherein the piercing and fastening portion are preferably not enlargeable radially and a second shaft portion (30) between the flange (16) and the second axial end (14) provides a functional portion, **characterized in that**
e) the flange (16) comprises an embossing ring (18) on the side which faces the first axial end (12), wherein the embossing ring (18) is arranged adjacent to the shaft (10), and
f) the fastening sleeve (1) comprises a circumferential annular groove (22) in the first shaft portion (20), wherein
g) embossing ring (18) and annular groove (22) transition into one another.

2. The self-piercing metal fastening sleeve (1) according to claim 1, having an outer diameter ($D_S$) of the first shaft portion (20) and an outer diameter ($D_B$) of the second shaft portion (30) which are smaller than an outer diameter ($D_F$) of the flange (16), wherein preferably, the outer diameter ($D_S$) of the first shaft portion (20) is smaller than the outer diameter ($D_B$) of the second shaft portion (30).

3. The self-piercing metal fastening sleeve (1) according to one of the preceding claims, where the first axial end (12) provides an annular piercing surface and the first axial end (12) comprises at least one of the following features:

   a) an inner diameter ($D_{B2}$), which amounts to 0.7 times to 0.8 times of the outer diameter ($D_S$),
   b) an outer diameter ($D_S$) between 25 mm and 45 mm,
   c) an inner diameter ($D_{B2}$) between 17 mm and 36 mm, and/or
   d) the piercing surface is at least 1.75 cm$^2$, preferably at least 2.5 cm$^2$ and particularly preferred at least 3 cm$^2$.

4. The self-piercing metal fastening sleeve (1) according to one of the preceding claims, wherein the first axial end (12) provides an annular piercing surface and the first shaft portion (20) comprises at least one of the following features:

a) a longitudinal knurling at its radial outside,
b) a length ($L_S$) corresponding to 0.2 to 1.0 times of a width of the annular piercing surface and/or
c) a chamfer (24) at the radial inside adjacent to the first axial end (12).

5. The self-piercing metal fastening sleeve (1) according to one of the preceding claims wherein the embossing ring (18) is configured without interruptions and comprises at least one of the following features:

   a) a arc-like contour, preferably having a radius ($R_P$) between 1.0 and 2.5 mm,
   b) a height ($H_P$) with respect to the side of the flange (16) which faces the first axial end (12) between 0.0022 times and 0.05 times of the outer diameter ($D_S$) at the first axial end (12), preferably between 0.0067 times and 0.032 times, and/or
   c) a height ($H_P$) with respect to the side of the flange (16) which faces the first axial end (12) of 0.1 to 0.8 mm.

6. The self-piercing metal fastening sleeve (1) according to one of the preceding claims, wherein the annular groove (22) is arranged adjacent to the flange (16) and/or configured without interruptions.

7. The self-piercing metal fastening sleeve (1) according to one of the preceding claims wherein the annular groove (22) comprises at least one of the following features:

   a) an arc-shaped contour preferably having a radius ($R_N$) between 1 mm and 2.5 mm and/or
   b) a depth ($T_N$) in the range of approximately 0.1 mm.

8. The self-piercing metal fastening sleeve (1) according to one of the preceding claims, having at least one of the following features:

   a) embossing ring (18) and annular groove (22) transition into one another directly,
   b) when viewed in radial direction, the height ($H_P$) of the embossing ring (18) and the height ($H_N$) of the annular groove (22) overlap so that there is an undercut and/or
   c) the height ($H_N$) of the annular groove (22) lies between 4 times and 10 times of the height ($H_P$) of the embossing ring (18), preferably, the height ($H_N$) of the annular groove (22) lies between 0.4 mm and 8 mm.

9. The self-piercing metal fastening sleeve (1) according to one of the preceding claims, wherein the flange (16) comprises a profiling as an anti-rotation securing contour on the side which faces the first axial end (12) of the shaft (10) and/or on the side which faces the second axial end (14) of the shaft (10), preferably in the form of a cam surface and/or in the form of rips extending in radial direction.

10. The self-piercing metal fastening sleeve (1) according to one of the preceding claims having a further embossing ring (40) on the side of the flange (16) which faces the first axial end (12) of the shaft (10), wherein the flange (16) is arranged radially outside with respect to the first embossing ring (18).

11. The self-piercing metal fastening sleeve (1) according to one of the preceding claims, consisting of a metallic material with a Vickers hardness HV 10 according to DIN EN ISO 6507-1 of approximately 320, in particular a manganese-boron steel.

12. A first component (3) into which a self-piercing metal fastening sleeve (1) according to one of the preceding claims is set.

13. The first component (3) according to claim 12, wherein the first component (3) is a metallic component (3), preferably out of a DP600 or DP800 steel and particularly preferred a high strength metallic component.

14. A connecting structure out of a first component (3) according to one of the preceding claims 12 or 13 and a second component (50) which are directly or indirectly connected with one another via the functional portion of the fastening sleeve (1).

15. A setting method for fastening the fastening sleeve (1) according to one of the claims 1 to 11 in a component (3) comprising the steps:

   a) providing the component (3), preferably without a pre-punched hole, as well as the fastening sleeve (1) according to one of the claims 1 to 11,
   b) driving-in the fastening sleeve (1) with the first axial end (12) first into the component (3), so that a piercing slug (5) is separated, and
   c) pressing the embossing ring (18) into the component (3) so that material of the component (3) is pushed into the direction of the first shaft portion (20) and the fastening sleeve (1) is arranged in a loss proof manner in the component (3) due to a force fit.

16. The setting method according to claim 15, wherein the fastening sleeve (1) furthermore provides an annular groove (22) so that during the step of impressing the embossing ring (18) into the component (3), material of the component (3) is additionally pushed into the annular groove (22).

**Revendications**

1. Manchon de fixation métallique auto-poinçonneur (1), lequel est adapté pour former un renforcement d'ouverture dans un composant métallique (3), de préférence dans un composant métallique (3) hautement résistant, et lequel présente les caractéristiques suivantes :

   a) un arbre cylindrique creux (10) doté d'une première (12) et d'une deuxième extrémité axiale (14),
   b) une bride (16) disposée entre la première (12) et la deuxième extrémité axiale (14) et conçue de manière fermée circonférentiellement autour de l'arbre (16), dans lequel
   c) la première (12) et la deuxième extrémité axiale (14) font saillie au-delà de la bride (16), et
   d) une première région d'arbre (20) entre la bride (16) et la première extrémité axiale (12) fournit une région de poinçonnage et de fixation pour la fixation imperdable du manchon de fixation (1) au composant métallique (3), dans lequel la région de poinçonnage et de fixation ne peut de préférence pas être élargie radialement, et une deuxième région d'arbre (30) entre la bride (16) et la deuxième extrémité axiale (14) fournit une région fonctionnelle, **caractérisé en ce que**
   e) la bride (16) présente un anneau de frappe (18) sur le côté tourné vers la première extrémité axiale (12), lequel est disposé de façon adjacente à l'arbre (10), et
   f) le manchon de fixation (1) présente une rainure annulaire circonférentielle (22) dans la première région d'arbre (20), dans lequel
   g) l'anneau de frappe (18) et la rainure annulaire (22) se fondent l'un dans l'autre.

2. Manchon de fixation métallique auto-poinçonneur (1) selon la revendication 1, dans lequel un diamètre extérieur ($D_S$) de la première région d'arbre (20) et un diamètre extérieur ($D_B$) de la deuxième région d'arbre (30) sont inférieure à un diamètre extérieur ($D_F$) de la bride (16), dans lequel le diamètre extérieur ($D_S$) de la première région d'arbre (20) est de préférence inférieur au diamètre extérieur ($D_B$) de la deuxième région d'arbre (30).

3. Manchon de fixation métallique auto-poinçonneur (1) selon l'une des revendications précédentes, dans lequel la première extrémité axiale (12) fournit une surface de poinçonnage annulaire et la première extrémité axiale (12) présente au moins l'une des caractéristiques suivantes :

   a) un diamètre intérieur ($D_{B2}$), lequel est de 0,7 à 0,8 fois le diamètre extérieur ($D_S$),

b) un diamètre extérieur ($D_S$) entre 25 mm et 45 mm,

c) un diamètre intérieur ($D_{B2}$) entre 17 mm et 36 mm, et/ou

d) la surface de poinçonnage est d'au moins 1,75 cm$^2$, de préférence d'au moins 2,5 cm$^2$ et de façon particulièrement préférée d'au moins 3 cm$^2$.

4. Manchon de fixation métallique auto-poinçonneur (1) selon l'une des revendications précédentes, dans lequel la première extrémité axiale (12) fournit une surface de poinçonnage annulaire et la première région d'arbre (20) présente au moins l'une des caractéristiques suivantes :

a) un moletage longitudinal sur son côté extérieur radial,

b) une longueur ($L_S$), laquelle correspond à 0,2 à 1,0 fois une largeur de la surface de poinçonnage annulaire, et/ou

c) un chanfrein (24) sur le côté intérieur radial, adjacent à la première extrémité axiale (12).

5. Manchon de fixation métallique auto-poinçonneur (1) selon l'une des revendications précédentes, dans lequel l'anneau de frappe (18) est conçu sans interruption et présente au moins l'une des caractéristiques suivantes :

a) un contour arqué, lequel présente de préférence un rayon ($R_P$) entre 1,0 et 2,5 mm,

b) une hauteur ($H_P$) par rapport au côté de la bride (16) tourné vers la première extrémité axiale (12), comprise entre 0,0022 fois et 0,05 fois le diamètre extérieur ($D_S$) à la première extrémité axiale (12), de préférence entre 0,0067 fois et 0,032 fois, et/ou

c) une hauteur ($H_P$) par rapport au côté de la bride (16) tourné vers la première extrémité axiale (12) comprise entre 0,1 et 0,8 mm.

6. Manchon de fixation métallique auto-poinçonneur (1) selon l'une des revendications précédentes, dans lequel la rainure annulaire (22) est disposée de façon adjacente à la bride (16) et/ou conçue sans interruption.

7. Manchon de fixation métallique auto-poinçonneur (1) selon l'une des revendications précédentes, dans lequel la rainure annulaire (22) présente au moins l'une des caractéristiques suivantes :

a) un contour arqué, lequel présente de préférence un rayon ($R_N$) entre 1 mm et 2,5 mm, et/ou

b) une profondeur ($T_N$) dans la plage d'environ 0,1 mm.

8. Manchon de fixation métallique auto-poinçonneur (1) selon l'une des revendications précédentes, lequel présente au moins l'une des caractéristiques suivantes :

a) l'anneau de frappe (18) et la rainure annulaire (22) se fondent directement l'un dans l'autre,

b) vu dans la direction radiale, la hauteur ($H_P$) de l'anneau de frappe (18) et la hauteur ($H_N$) de la rainure annulaire (22) se superposent, de manière à former une contre-dépouille, et/ou

c) la hauteur ($H_N$) de la rainure annulaire (22) est comprise entre 4 fois et 10 fois la hauteur ($H_P$) de l'anneau de frappe (18), la hauteur ($H_N$) de la rainure annulaire (22) étant de préférence comprise entre 0,4 mm et 8 mm.

9. Manchon de fixation métallique auto-poinçonneur (1) selon l'une des revendications précédentes, dans lequel, sur le côté tourné vers la première extrémité axiale (12) de l'arbre (10) et/ou sur le côté tourné vers la deuxième extrémité axiale (14) de l'arbre (10), la bride (16) présente un profilage en tant que contour anti-rotation, de préférence sous la forme d'une surface à cames et/ou sous la forme de nervures s'étendant dans la direction radiale.

10. Manchon de fixation métallique auto-poinçonneur (1) selon l'une des revendications précédentes, lequel présente un autre anneau de frappe (40) sur le côté de la bride (16) tourné vers la première extrémité axiale (12) de l'arbre (10), lequel est disposé radialement à l'extérieur par rapport au premier anneau de frappe (18).

11. Manchon de fixation métallique auto-poinçonneur (1) selon l'une des revendications précédentes, lequel est constitué d'un matériau métallique avec une dureté Vickers HV 10 selon la norme DIN EN ISO 6507-1 d'environ 320, en particulier d'un acier au manganèse-bore.

12. Premier composant (3), lequel présente un manchon de fixation métallique auto-poinçonneur (1) selon l'une des revendications précédentes placé dans celui-ci.

13. Premier composant (3) selon la revendication 12, dans lequel le premier composant (3) est un composant métallique (3), de préférence en un acier DP600 ou DP800 et de façon particulièrement préférée un composant métallique hautement résistant.

14. Structure d'assemblage constituée d'un premier composant (3) selon l'une des revendications précédentes 12 ou 13 et d'un deuxième composant (50), lesquels sont reliés entre eux directement ou indirectement par le biais de la région fonctionnelle du manchon de fixation (1).

**15.** Procédé de pose destiné à fixer le manchon de fixation (1) selon l'une des revendications 1 à 11 dans un composant (3), lequel comporte les étapes suivantes :

a) mise à disposition du composant (3), de préférence sans perforation, et du manchon de fixation (1) selon l'une des revendications 1 à 11, b) enfoncement du manchon de fixation (1) avec la première extrémité axiale (12) à l'avant dans le composant (3), de manière à séparer une débouchure (5), et c) insertion par pression de l'anneau de frappe (18) dans le composant (3), moyennant quoi le matériau du composant (3) est refoulé vers la première région d'arbre (20), et le manchon de fixation (1) est disposé dans le composant (3) de façon imperdable en raison d'une adhérence.

**16.** Procédé de pose selon la revendication 15, dans lequel le manchon de fixation (1) présente également une rainure annulaire (22), de sorte que pendant l'étape d'insertion par pression de l'anneau de frappe (18) dans le composant (3), du matériau du composant (3) est en outre refoulé dans la rainure annulaire (22).

Fig. 1

Fig. 2

Fig. 3

Fig. 4a         Fig. 4b         Fig. 4c

Fig. 5

Fig 6                    Fig. 7

Fig. 8

Fig. 9

**EP 4 617 512 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5513933 A
- WO 2022123805 A1
- EP 0856670 A1
- US 1946064 A
- DE 102008017689 A1
- CN 102003448 A
- EP 4023894 A1
- US 2007258788 A1
- WO 2004022987 A1